# EUROPEAN PATENT SPECIFICATION

(11) **EP 2 879 128 B1**
(45) Date of publication and mention of the grant of the patent: **31.03.2021**
(21) Application number: 14195002.2
(22) Date of filing: 26.11.2014
(51) Int. Cl.: G10K 9/22, G01S 7/521, G01S 15/931, G10K 11/00

(54) **ULTRASONIC SENSOR AND METHOD OF MANUFACTURING THE SAME**
ULTRASCHALLSENSOR UND VERFAHREN ZU SEINER HERSTELLUNG
CAPTEUR À ULTRASONS ET SON PROCÉDÉ DE FABRICATION

(30) Priority: 27.11.2013 CN 201310611415
(43) Date of publication of application: 03.06.2015
(73) Proprietor: Valeo Interior Controls (Shenzhen) Co., Ltd, 518128 Shenzhen (CN)
(72) Inventor: CHEN, Boqian, Shenzen 51828 (CN); ZHOU, Shunong, Shenzen 51828 (CN); WANG, Haidong, Shenzen 51828 (CN)
(74) Representative: Withopf, Kristina

(56) References cited:
- DE-U1-202013 104 569
- GB-A- 2 491 977
- JP-A- 2000 023 291
- US-A1- 2007 237 031
- US-A1- 2008 184 802
- US-A1- 2008 289 428
- US-A1- 2012 167 689
- US-A1- 2012 176 866
- US-A1- 2013 104 660

## Description

### Technical field

The present invention relates to an ultrasonic sensor, in particular for a vehicle parking assistance system or an assisted vehicle-reversing system, and a method of manufacturing the same.

### Background art

Ultrasonic sensors were developed by exploiting the characteristics of ultrasound. Ultrasound is produced when a transducer chip is excited by a voltage and vibrates; its characteristics include high frequency, short wavelength, a low degree of diffraction, good directionality, and the ability to form rays for directional propagation. Ultrasound has a strong ability to penetrate liquids and solids, and will generate echoes due to notable reflection when striking impurities or interfaces. It can also give rise to the Doppler effect when striking moving objects. As a result, ultrasonic sensors are widely used in industry, defence and biomedicine, etc.

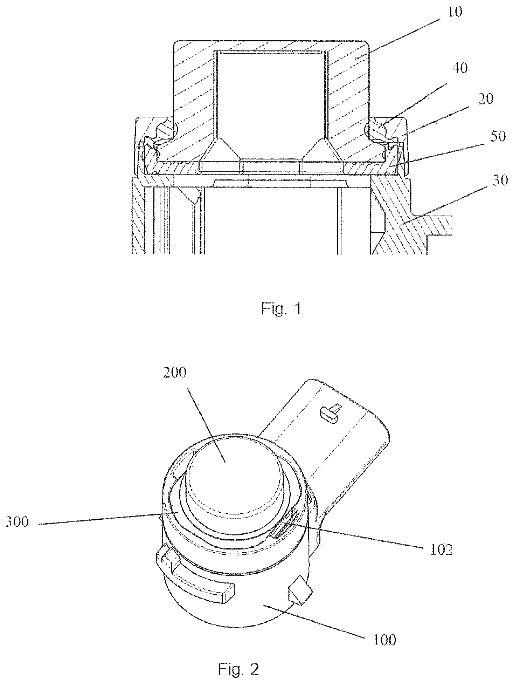

Fig. 1 shows a sectional drawing of an ultrasonic sensor for a vehicle parking assistance system or an assisted vehicle-reversing system. As Fig. 1 shows, the ultrasonic sensor comprises a casing 10 containing a piezoelectric element, a top cover 20 and an outer casing 30. In the ultrasonic sensor, two silica gel components 40 and 50, which are fitted together, achieve the isolation of the bottom of the casing 10 and the outside as well as waterproof sealing between the casing 10, top cover 20 and outer casing 30, wherein secondary injection moulding of one silica gel component 40 inside the top cover 20 is achieved by encapsulation, making the structure complicated and the manufacturing process tedious. Furthermore, the top cover 20 is usually joined to the outer casing 30 by laser welding, etc., so the cost of the product and the cost of the mould are both quite high.

An ultrasonic sensor is known from US 2007/0237031 A1 which has an intermediate connection member for having electrical connection between an ultrasonic transducer and a circuit board.

US 2008/0184802 A1 discloses a mount structure for a mobile unit includes a wall member, a sensor device, and a color film.

GB 2491977 A discloses an ultrasonic transducer comprising a piezoelectric element, with a printed ciruit board and with a diaphragm pot.

US 2012/0167689 A1 discloses to provide a ultrasonic sensor at a bumper of a vehicle and used in a vehicle obstacle detector that detects the presence of an obstacle within a detection area by transmitting and receiving ultrasonic waves.

JP 2000 023291 A discloses an ultrasonic sensor with a diaphragm which is glued to a casing.

US 2012/0176866 A1 discloses an ultrasonic sensor including a transceiver device for transmitting and receiving ultrasonic waves.

US 2008/0289428 A1 discloses an ultrasonic sensor, which includes a cylindrical case with a bottom. A piezoelectric element is bonded to an inner side of a bottom portion of the case, and d felt is bonded to the piezoelectric element.

DE 20 2013 104 569 U1 discloses a ultrasonic sensor for transmitting and receiving ultrasonic waves with a cup shaped housing which is closed with a bottom.

US 2013/0104660 A1 discloses an ultrasonic transducer module for an ultrasonic sensor for detection and/or examination of value documents which includes at least one piezoelectric ultrasonic transducer.

Thus, a question which requires urgent solution in the art is how to simplify the structure and assembly steps of ultrasonic sensors in order to lower production costs while ensuring sealed isolation and shock absorption.

### Content of the invention

The object of the present invention is to provide an ultrasonic sensor, in particular for a vehicle parking assistance system or an assisted vehicle-reversing system, with a simple structure and low product cost.

According to one aspect of the present invention, an ultrasonic sensor for a vehicle parking assistance system or an assisted vehicle-reversing system is provided, comprising: an outer housing, which contains a printed circuit board; a casing placed in the outer housing, in which casing a piezoelectric element is disposed; and a sealing ring, which is disposed between the casing and the outer housing so as to seal both bottom and periphery of the casing; wherein at least one aperture is disposed on a top surface of the outer housing and the aperture is determined to be filled with adhesive by injection of the adhesive through the aperture to fix the sealing ring to the outer housing.

According to another aspect of the present invention, a method for manufacturing an ultrasonic sensor for a vehicle parking assistance system or an assisted vehicle-reversing system is provided, the method comprising the following steps: first providing an outer housing which contains a printed circuit board, a top surface of the outer housing being provided with at least one aperture; next enclosing both bottom and periphery of a casing containing a piezoelectric element by means of a sealing ring so as to form an assembly; next placing the assembly in the outer housing so that the sealing ring is disposed between the casing and the outer housing; and next filling the at least one aperture on the top surface of the outer housing with adhesive by injecting the adhesive though the aperture so as to fix the sealing ring to the outer housing.

Preferably, the outer housing if made of plastics. Preferably, the casing is made of aluminium alloy.

Preferably, the casing protrudes from the top surface of the outer housing or is flush with the top surface of the outer housing.

Preferably, the sealing ring is made of elastomer materials.

Preferably, the adhesive is liquid silica gel or glue. The design of the sealing ring achieves two functions, namely isolation of the periphery and bottom of the casing, and waterproof sealing between the casing and outer housing, so there is no longer a need for two silica gel components to achieve sealing at different positions, as in the prior art structure shown in Fig. 1. The sealing ring can be formed in a mould, with high production efficiency and low costs.

The bottom of the casing is placed in the sealing ring, which is fixed directly to the outer housing by an adhesive such as liquid silica gel or glue, so that the top cover used in the prior art is dispensed with. Since the present invention does not need a top cover, the corresponding component cost and mould cost are saved.

Furthermore, only a small amount of adhesive is needed to fix the sealing ring firmly to the outer housing.

Moreover, since the sealing ring need only enclose the bottom of the casing, with the top of the casing protruding outside the outer housing, a corresponding saving can be made in casing materials while ensuring sealing.

### Description of the accompanying drawings

Fig. 1 is a sectional drawing of an ultrasonic sensor in the prior art.
Fig. 2 is a perspective drawing of an ultrasonic sensor according to the present invention.
Fig. 3 is a longitudinal sectional drawing of an ultrasonic sensor according to the present invention.
Fig. 4 is a transverse sectional drawing of an ultrasonic sensor according to the present invention.

### Particular embodiments

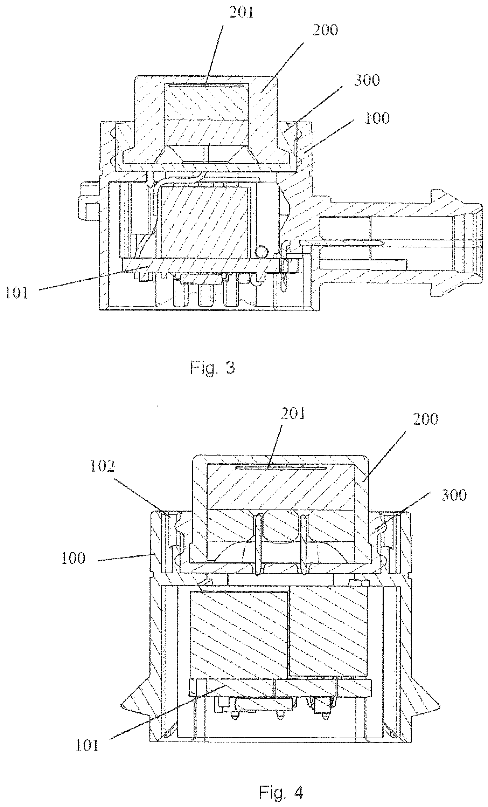

The present invention is described in detail below with reference to the accompanying drawings. Fig. 2 is a perspective drawing of an ultrasonic sensor according to the present invention. Fig. 3 is a longitudinal sectional drawing of an ultrasonic sensor according to the present invention. Fig. 4 is a transverse sectional drawing of an ultrasonic sensor according to the present invention. Referring to Figs. 2 - 4, the ultrasonic sensor according to the present invention, in particular for a vehicle parking assistance system or an assisted vehicle-reversing system, comprises an outer housing 100, a casing 200 and a sealing ring 300. The outer housing 100 contains a printed circuit board 101 on which electronic elements are mounted, etc. The outer housing 100 is preferably made of plastics. A piezoelectric element 201, for example piezoelectric ceramic, is disposed in the casing 200. The casing 200 is disposed in the outer housing 100, preferably protruding from the top surface of the outer housing 100, but may also be flush with the top surface of the outer housing 100. The casing 200 is preferably made of aluminium alloy. The sealing ring 300 is disposed between the outer housing 100 and the casing 200, to seal the opening at the bottom of the casing 200 and the periphery of the casing 200. The sealing ring 300 is preferably made of elastomer materials, such as silica gel or rubber. The sealing ring 300 is preformed, for example pre-moulded.

At least one aperture 102 is disposed on a top surface of the outer housing 100 and is filled with adhesive to fix the sealing ring 300 to the outer housing 100. The adhesive is for example liquid silica gel or glue, injected through the at least one aperture 102. In this embodiment, two apertures 102 arranged opposite each other are shown, but the present invention is not limited to this; one or more apertures 102 may be provided at appropriate position(s) on the top surface of the outer housing 100.

A method for manufacturing an ultrasonic sensor according to the present invention is described below.

First, an outer housing 100 is provided, the outer housing 100 containing a printed circuit board 101, etc., and at least one aperture 102 being provided on a top surface of the outer housing 100. Next, the bottom and periphery of a casing 200 containing a piezoelectric element 201 are enclosed by a sealing ring 300 which is for example pre-moulded, to form an assembly. Next, the assembly is placed in the outer housing 100 so that the sealing ring 300 is disposed between the casing 200 and the outer housing 100. Next, the at least one aperture 102 on the top surface of the outer housing 100 is filled with adhesive (for example, adhesive is injected through the at least one aperture 102 on the top surface of the outer housing 100) so as to fix the sealing ring 300 to the outer housing 100.

According to the present invention, the design of the sealing ring achieves two functions, namely isolation of the periphery and bottom of the casing, and waterproof sealing between the casing and outer housing. The bottom of the casing is placed in the sealing ring, which is fixed directly to the outer housing by an adhesive such as liquid silica gel or glue, so that the top cover used in the prior art is dispensed with. The sealing ring can be formed in a mould, with high production efficiency and low costs. Since the present invention does not need a top cover, the corresponding component cost and mould cost are saved. Furthermore, only a small amount of adhesive is needed to fix the sealing ring firmly to the outer housing. Moreover, since the sealing ring need only enclose the bottom of the casing, with the top of the casing protruding outside the outer housing, a corresponding saving can be made in casing materials while ensuring sealing.

## Claims

1. An ultrasonic sensor for a vehicle parking assistance system or an assisted vehicle-reversing system, comprising:
an outer housing (100), which contains a printed circuit board (101);
a casing (200) placed in the outer housing, in which a piezoelectric element (201) is disposed; and
a sealing ring (300), which is disposed between the casing and the outer housing so as to seal both bottom and periphery of the casing;
**characterized in that**,
at least one aperture (102) is disposed on a top surface of the outer housing and the aperture (102) is determined to be filled with adhesive by injection of the adhesive through the aperture (102) to fix the sealing ring to the outer housing.

2. The ultrasonic sensor according to claim 1, wherein the outer housing is made of plastics.

3. The ultrasonic sensor according to claim 1 or 2, wherein the casing is made of aluminum alloy.

4. The ultrasonic sensor according to any of the preceding claims, wherein the casing is protruded from the top surface of the outer housing.

5. The ultrasonic sensor according to any of claims 1 to 3, wherein the casing is flush with the top surface of the outer housing.

6. The ultrasonic sensor according to any of the preceding claims, wherein the sealing ring is made of elastomer materials.

7. The ultrasonic sensor according to any of the preceding claims, wherein the adhesive is liquid silica gel or glue.

8. A method of manufacturing an ultrasonic sensor for a vehicle parking assistance system or an assisted vehicle-reversing system, comprising the following steps:
first providing an outer housing (100) which contains a printed circuit board (101), a top surface of the outer housing is provided with at least one aperture (102);
next enclosing both bottom and periphery of a casing (200) containing a piezoelectric element (201) by a sealing ring (300) so as to form an assembly;
next placing the assembly in the outer housing so that the sealing ring is disposed between the casing and the outer housing; and
next filling the at least one aperture (102) on the top surface of the outer housing with adhesive by injecting the adhesive through the aperture (102) so as to fix the sealing ring to the outer housing.

9. The method according to claim 8, wherein the casing is protruded from the top surface of the outer housing.

10. The method according to claim 8, wherein the casing is flush with the top surface of the outer housing.

11. The method according to any of the claims 8 to 10, wherein the outer housing is made of plastics.

12. The method according to any of the claims 8 to 11, wherein the sealing ring is made of elastomer materials.

13. The method according to any of the claims 8 to 12, wherein the adhesive is liquid silica gel or glue.

## Patentansprüche

1. Ultraschallsensor für ein Einparkhilfesystem eines Fahrzeugs oder ein Rückfahrhilfesystem eines Fahrzeugs, Folgendes umfassend:
ein äußeres Gehäuse (100), das eine Leiterplatte (101) enthält;
eine Verkleidung (200), die in dem äußeren Gehäuse platziert ist, in der ein piezoelektrisches Element (201) angeordnet ist; und
einen Dichtungsring (300), der zwischen der Verkleidung und dem äußeren Gehäuse angeordnet ist, um so sowohl einen Boden als auch eine Peripherie der Verkleidung zu dichten;
**dadurch gekennzeichnet, dass**
mindestens eine Öffnung (102) auf einer oberen Oberfläche des äußeren Gehäuses angeordnet ist und die Öffnung (102) dazu bestimmt ist, durch Injektion von Klebstoff durch die Öffnung (102) mit dem Klebstoff gefüllt zu werden, um den Dichtungsring an dem äußeren Gehäuse zu befestigen.

2. Ultraschallsensor nach Anspruch 1, wobei das äußere Gehäuse aus Kunststoffen angefertigt ist.

3. Ultraschallsensor nach Anspruch 1 oder 2, wobei die Verkleidung aus Aluminiumlegierung angefertigt ist.

4. Ultraschallsensor nach einem der vorhergehenden Ansprüche, wobei die Verkleidung aus der oberen Oberfläche des äußeren Gehäuses vorsteht.

5. Ultraschallsensor nach einem der Ansprüche 1 bis 3, wobei die Verkleidung mit der oberen Oberfläche des äußeren Gehäuses bündig ist.

6. Ultraschallsensor nach einem der vorhergehenden Ansprüche, wobei der Dichtungsring aus Elastomermaterialien angefertigt ist.

7. Ultraschallsensor nach einem der vorhergehenden Ansprüche, wobei der Klebstoff flüssiges Silikagel oder Leim ist.

8. Verfahren zum Herstellen eines Ultraschallsensors für ein Einparkhilfesystem eines Fahrzeugs oder ein Rückfahrhilfesystem eines Fahrzeugs, die folgenden Schritte umfassend:
zuerst Bereitstellen eines äußeren Gehäuses (100), das eine Leiterplatte (101) enthält, wobei eine obere Oberfläche des äußeren Gehäuses mit mindestens einer Öffnung (102) versehen ist;
dann Verschließen sowohl eines Bodens als auch einer Peripherie einer Verkleidung (200), die ein piezoelektrisches Element (201) enthält, durch einen Dichtungsring (300), um so eine Einheit auszubilden;
dann Platzieren der Einheit in dem äußeren Gehäuse, so dass der Dichtungsring zwischen der Verkleidung und dem äußeren Gehäuse angeordnet ist; und
dann Füllen der mindestens einen Öffnung (102) auf der oberen Oberfläche des äußeren Gehäuses mit Klebstoff durch Injizieren des Klebstoffs durch die Öffnung (102), um so den Dichtungsring an dem äußeren Gehäuse zu befestigen.

9. Verfahren nach Anspruch 8, wobei die Verkleidung aus der oberen Oberfläche des äußeren Gehäuses vorsteht.

10. Verfahren nach Anspruch 8, wobei die Verkleidung mit der oberen Oberfläche des äußeren Gehäuses bündig ist.

11. Verfahren nach einem der Ansprüche 8 bis 10, wobei das äußere Gehäuse aus Kunststoffen angefertigt ist.

12. Verfahren nach einem der Ansprüche 8 bis 11, wobei der Dichtungsring aus Elastomermaterialien angefertigt ist.

13. Verfahren nach einem der Ansprüche 8 bis 12, wobei der Klebstoff flüssiges Silikagel oder Leim ist.

## Revendications

1. Capteur à ultrasons pour un système d'aide au stationnement ou un système d'aide à la marche arrière d'un véhicule, comprenant :
un carter extérieur (100), qui contient une carte de circuit imprimé (101) ;
un boîtier (200) placé dans le carter extérieur, dans lequel est disposé un élément piézoélectrique (201) ; et une bague d'étanchéité (300), qui est disposée entre le boîtier et le carter extérieur de manière à assurer l'étanchéité du fond et de la périphérie du boîtier ; **caractérisé en ce que**,
au moins une ouverture (102) est disposée, sur une surface supérieure du carter extérieur et on détermine que l'ouverture (102) est remplie d'adhésif par injection de l'adhésif à travers l'ouverture (102) pour fixer la bague d'étanchéité au carter extérieur.

2. Capteur à ultrasons selon la revendication 1, le carter extérieur étant en plastique.

3. Capteur à ultrasons selon la revendication 1 ou 2, le boîtier étant en alliage d'aluminium.

4. Capteur à ultrasons selon l'une quelconque des revendications précédentes, le boîtier dépassant de la surface supérieure du carter extérieur.

5. Capteur à ultrasons selon l'une quelconque des revendications 1 à 3, le boîtier étant à fleur de la surface supérieure du carter extérieur.

6. Capteur à ultrasons selon l'une quelconque des revendications précédentes, la bague d'étanchéité étant constituée de matériaux élastomères.

7. Capteur à ultrasons selon l'une quelconque des revendications précédentes, l'adhésif étant du gel de silice liquide ou de la colle.

8. Procédé de fabrication d'un capteur à ultrasons pour un système d'aide au stationnement d'un véhicule ou un système d'aide à la marche arrière d'un véhicule, comprenant les étapes suivantes :
la fourniture d'abord d'un carter extérieur (100) qui contient une carte de circuit imprimé (101), une surface supérieure du carter extérieur étant pourvue d'au moins une ouverture (102) ;
le fait d'entourer ensuite le fond et la périphérie d'un boîtier (200) contenant un élément piézoélectrique (201) par une bague d'étanchéité (300) de manière à former un ensemble ;
le fait de placer ensuite l'ensemble dans le carter extérieur de manière à ce que la bague d'étanchéité soit disposée entre le boîtier et le carter extérieur ; et
le remplissage ensuite, de l'au moins une ouverture (102) sur la surface supérieure du carter extérieur avec un adhésif en injectant l'adhésif à travers l'ouverture (102) de manière à fixer la bague d'étanchéité au carter extérieur.

9. Procédé selon la revendication 8, le boîtier dépassant de la surface supérieure du carter extérieur.

10. Procédé selon la revendication 8, le boîtier étant à fleur de la surface supérieure du carter extérieur.

11. Procédé selon l'une quelconque des revendications 8 à 10, le carter extérieur étant en matière plastique.

12. Procédé selon l'une quelconque des revendications 8 à 11, la bague d'étanchéité étant constituée de matériaux élastomères.

13. Procédé selon l'une quelconque des revendications 8 à 12, l'adhésif étant du gel de silice liquide ou de la colle.
